# FASCICULE DE BREVET EUROPEEN

(11) **EP 3 383 729 B1**
(45) Date de publication et mention de la délivrance du brevet: **11.09.2019**
(21) Numéro de dépôt: 16809951.3
(22) Date de dépôt: 28.10.2016
(51) Int. Cl.: B62D 27/02

(54) **ELEMENT DE LIAISON ENTRE DEUX PAROIS**
VERBINDUNGSELEMENT ZWISCHEN ZWEI WÄNDEN
LINKING ELEMENT BETWEEN TWO WALLS

(30) Priorité: 30.11.2015 FR 1561563
(43) Date de publication de la demande: 10.10.2018
(73) Titulaire: PSA AUTOMOBILES S.A., 78300 Poissy (FR)
(72) Inventeur: RICHARD, Olivier, 68130 Wittersdorf (FR); HIGELIN, Vincent, 25200 Montbeliard (FR)
(86) Numéro de dépôt international: PCT/FR2016/052824
(87) Numéro de publication internationale: WO 2017/093625

(56) Documents cités:
- EP-A2- 0 980 817
- DE-A1-102009 043 854
- FR-A1- 2 998 013
- JP-A- S57 201 774
- US-A1- 2014 145 469

## Description

L'invention concerne un élément de liaison entre deux parois non parallèles, de préférences deux parois en tôle. L'invention concerne aussi un ensemble de parois reliées par un tel élément de liaison.

Classiquement, les tôles formant la caisse d'un véhicule sont fixées entre-elles par soudage ou par collage. Lorsque les parois ne sont pas alignées, c'est-à-dire lorsqu'elles forment entre-elles un angle différent de 180 degrés, l'une des parois comporte généralement un bord tombé qui est en contact avec la surface de l'autre paroi, de manière à créer une surface permettant le dépôt d'un cordon de colle ou le soudage par point sur ledit bord tombé. Par exemple, le brevet EP0980817 décrit un plancher arrière de véhicule fixé à une tôle formant le passage de roue arrière, le plancher comportant un bord tombé qui vient au contact avec la tôle de passage de roue et fixant les tôles ensemble.

Ce type de solution de fixation est réalisable lorsque le bord tombé de l'une des parois est en contact avec l'autre paroi, ou que le jeu entre le bord tombé de l'une des parois et l'autre paroi est suffisamment faible pour permettre une légère déformation des parois de manière à mettre en contact lesdites parois et permettre ainsi leur fixation par soudage ou collage. Si ce jeu, c'est-à-dire l'espacement entre les deux parois, est trop important, il n'est plus possible de mettre en contact le bord tombé avec l'autre paroi pour faire un soudage par point ou permettre à un cordon de colle de fixer les deux parois entre elles. De plus, lorsque l'espacement entre les bords de deux parois est important, il devient difficile d'appliquer un cordon d'étanchéité qui relie les bords de ces parois et bouche l'espace entre lesdits bords. En effet, comme la matière utilisée pour faire un tel cordon d'étanchéité doit être suffisamment fluide pour être appliquée, elle ne peut pas boucher un espace trop large sans s'écouler. Or, un jeu important entre les deux parois peut être nécessaire, par exemple pour permettre un assemblage des parois entre-elles dans le processus de fabrication.

De plus, le soudage par point nécessite que l'outil de soudage, qui est sous la forme d'une pince, puisse accéder à la zone de soudage et aux deux côtés des parois pour pincer la zone à souder. Si l'une de ces conditions n'est pas possible, il devient compliqué de fixer les deux parois entre-elles. De même, pour le collage, il faut pouvoir pincer les deux parois entres-elles dans la zone de collage pour assurer une bonne prise de la colle.

L'objet de l'invention est de résoudre ces inconvénients. En particulier, l'un des objectifs de l'invention est de créer un lien rigide entre deux parois non parallèles entre-elles et entre lesquelles existe un jeu important. Un autre objet de l'invention est de permettre de fixer deux parois lorsqu'il n'y a pas d'accès pour une pince serrant lesdites parois l'une contre l'autre pour souder ou coller les parois entre elles. Un autre objectif est de permettre une fixation entre deux plaques lorsqu'il y a un jeu important entre leur bord, ainsi que de permettre la mise en place d'un cordon d'étanchéité malgré un tel jeu. Un autre objectif est de permettre la fixation de telles parois ensemble en n'ayant accès que d'un seul côté de ces parois.

Ce but est atteint selon l'invention, grâce à un élément de liaison destiné à fixer au moins deux parois entre-elles, lesdites parois formant un angle entre-elles différent de cent quatre-vingt degrés, caractérisé en ce qu'il comporte
- une équerre de confinement destiné à être fixée au moins sur l'une des deux parois, et agencée de manière à former un corps creux avec les deux parois lorsque ladite équerre de confinement est fixée à au moins une desdites parois,
- un insert structural adhérent et expansible, destiné à être positionné dans le corps creux.

Ainsi, en fixant l'élément de liaison de manière à ce qu'il soit positionné à la jonction entre les deux parois, l'expansion de l'insert structural, qui peut être activé par exemple par la chaleur lors d'un passage dans un bain de cataphorèse ou dans une étuve après une étape de peinture, gonfle et remplit le corps creux. De préférence, l'insert structural remplit tout le volume du corps creux, c'est-à-dire l'espace entre les deux parois et l'équerre de confinement. Etant adhérent, l'insert structural colle à la surface de chacune des parois et appuie sur chacune des deux parois en gonflant. L'équerre de confinement permet de diriger l'expansion de l'insert structural vers les deux parois. L'insert structural une fois expansé est aussi au contact de la surface de l'équerre de confinement située du côté du corps creux, et adhère donc aussi à ladite équerre de confinement. Une fois refroidi, l'insert structural conserve son volume et reste collé aux deux parois et à l'équerre de confinement. L'élément de fixation permet ainsi une fixation efficace entre les deux parois grâce au recouvrement par l'insert structural des surfaces des parois situées dans le corps creux et à son adhérence à sur ces parois. Un autre avantage de l'expansion de l'insert, confiné dans le corps creux par l'équerre de confinement, est de permettre de fixer les deux parois ensemble même s'il existe un jeu entre lesdites parois. En effet, l'expansion de l'insert structural permet à celui-ci de venir recouvrir les surfaces des parois qui sont situées dans le corps creux et d'adhérer à elles, et ainsi de créer un lien mécanique entre les deux parois.

L'insert remplissant le corps creux lors de son expansion, il peut avantageusement former une barrière d'étanchéité entre les deux parois. De plus, lorsqu'un jeu existe entre les bords des deux parois au niveau de la zone de fixation, en choisissant une quantité de matière et une forme d'insert structural adéquate de manière à ce que l'insert structural s'étende jusqu'audit jeu lors de son expansion, ledit insert peut ainsi former une surface d'appui permettant d'appliquer un cordon d'étanchéité reliant lesdits bords des parois de manière à boucher le jeu de manière étanche.

Un autre avantage est que cet élément de liaison permet de fixer deux parois entre-elles par des moyens simples, qui ne nécessitent pas d'avoir accès aux deux côtés des parois. En effet, la fixation de l'élément de liaison, et en particulier de l'équerre de confinement, sur l'une des parois permet de maintenir l'élément de liaison jusqu'à l'expansion de l'insert structural. Les moyens de fixation n'ont pas besoin de résister à des efforts mécaniques important car les efforts subits par l'élément de fixation avant l'expansion de l'insert sont faibles.

Une fois l'insert structural expansé, celui-ci adhère aux deux parois ainsi qu'à l'équerre de confinement. Les contraintes mécaniques passant d'une paroi à l'autre sont donc transmises par l'insert structural expansée et non seulement par les moyens de fixation de l'équerre de confinement à l'une des parois.

L'insert structural adhérant aussi à l'équerre de confinement, ladite équerre participe donc aussi à la rigidité de la fixation entre les deux parois grâce à la liaison mécanique créée par l'insert structural entre les deux parois et ladite équerre de confinement.

L'équerre de confinement peut être fixée à l'une des parois par exemple par des moyens de fixation de type collage ou rivetage, qui permettent une fixation dudit élément par un accès sur un seul côté de l'une des parois. Ces types de moyens de fixation ont de plus l'avantage de ne pas être complexes et chers à mettre en oeuvre, et utilisent des outillages faciles à manipuler, peu chers, et qui peuvent accéder à des zones difficiles d'accès.

L'utilisation d'un insert structural expansible permet avantageusement de placer et fixer sans effort l'équerre de confinement, l'insert structural étant alors de dimension suffisamment faible pour ne pas gêner la mise en place de ladite équerre, et d'avoir ensuite un insert structural recouvrant les surfaces des deux parois situées dans le corps creux grâce à son expansion. Cette expansion de l'insert structural permet de plus de générer une pression sur les parois, rigidifiant la liaison entre lesdites parois en appliquant une contrainte sur ces parois. L'insert peut être réalisé par exemple par une mousse expansive à base de polymère époxyde.

De préférence, l'élément de liaison est destiné à être fixé dans l'angle saillant entre lesdites parois.

De préférence, un des bords de l'équerre de confinement est plaqué contre la paroi sur laquelle elle n'est pas fixée, afin d'assurer le plaquage de l'insert structural contre ladite paroi lors de son expansion et d'éviter que de la matière de l'insert s'échappe du corps creux par un éventuel espace entre ladite équerre de confinement et ladite paroi.

Selon un mode de réalisation préféré de l'invention, l'insert structural est expansible thermiquement.

L'utilisation d'un insert expansible thermiquement, c'est-à-dire augmentant de volume sous l'action de la chaleur, permet d'utiliser des étapes de fabrication avec chauffage d'un objet comprenant l'élément de liaison. L'expansion de l'insert structural peut être ainsi avantageusement activée après la mise en place de l'élément de liaison, lors d'une autre étape de fabrication de l'objet comportant les deux parois à fixer entre elles. Par exemple, lorsque les parois sont des tôles d'un véhicule, le chauffage de l'insert pour obtenir son expansion peut être réalisé lors du chauffage de la caisse du véhicule nécessaire pour cuire une peinture appliquée sur ladite caisse. Dans cet exemple, le matériau est choisi expansible à la température de cuisson de la peinture.

Dans un autre mode de réalisation de l'invention, l'insert structural est rigide après son expansion.

Ainsi, la liaison obtenue par l'élément de liaison est rigide grâce à la rigidité de l'insert structural qui, une fois expansé, recouvre et adhère aux surfaces des parois situées dans le corps creux.

Dans un autre mode de réalisation de l'invention, l'insert structural est fixé à l'équerre de confinement.

Ainsi, de manière avantageuse, la manipulation de l'élément de liaison est plus aisée, l'équerre de confinement et l'insert structural ne se séparant pas.

La fixation de l'insert sur l'équerre de confinement peut être réalisée par exemple par collage ou par un système de clip.

L'invention porte aussi sur un ensemble comportant aux moins deux parois fixées entre elles par un élément de liaison tel que décrit dans l'invention précédente, l'équerre de confinement étant fixée à au moins l'une des deux parois.

Ainsi avantageusement, l'ensemble est particulièrement rigide, et la fixation entre les parois réalisée de manière simple, même si l'accès à la zone de fixation est difficile. En particulier, l'élément de liaison peut être fixé à l'une des parois avant que la deuxième paroi ne soit positionnée par rapport à la première paroi. L'élément de liaison peut ainsi être dans une zone inaccessible une fois les deux parois positionnées l'une par rapport à l'autre, et la fixation réalisée ensuite par l'expansion de l'insert structural.

L'élément de liaison peut être le seul moyen fixant entre les deux parois entre-elles, ou être utilisé en combinaison avec d'autres moyens de fixation connus pour fixer des parois entre elles.

Selon un mode de réalisation préféré de l'invention, la fixation de l'équerre de confinement à l'une des deux tôles est réalisée par collage et/ou rivetage.

Ainsi avantageusement, le collage permet une fixation de l'équerre de confinement sans avoir besoin d'accéder aux deux côtés de la tôle sur laquelle est fixée ladite équerre. De plus, le collage est simple à réaliser car il ne nécessite pas de manipuler de pièces de fixation mais simplement l'application d'une colle.

La mise en place de rivets ne nécessite pas d'avoir accès aux deux côtés de la tôle, et est en outre rapide à réaliser. La fixation par rivets permet de plus un positionnement de la pièce grâce aux rivets s'insérant dans des trous déjà présents. De manière avantageuse, la fixation peut être réalisée par l'association du rivetage et du collage. Ainsi, les rivets permettent de positionner l'équerre de confinement sur la tôle sur laquelle elle est fixée, de presser ladite équerre contre la paroi afin de presser le cordon de colle, et de maintenir immobile ladite équerre jusqu'au séchage de la colle afin d'obtenir une bonne adhérence de ladite colle. La fixation de l'équerre de confinement sur la tôle est suffisamment solide pour résister efficacement à l'expansion de l'insert structural lors de son changement de volume.

La colle est de préférence de type colle structurale. Par exemple, un tel type de colle structurale peut être une colle à base de résine époxy.

L'invention porte aussi sur un véhicule comportant un élément de liaison tel que décrit précédemment.

Dans un mode de réalisation particulier, l'élément de liaison fixe un plancher arrière à une paroi de passage de roue arrière du véhicule.

L'application de l'élément de liaison pour fixer, au moins en partie, le plancher avec la paroi de passage de roue est particulièrement avantageuse.

En effet, lors de la fabrication d'un véhicule, la paroi de passage de roue est généralement fixée d'abord à un flanc du véhicule et le plancher à un soubassement dudit véhicule, puis ledit flanc latéral et le soubassement sont assemblés entre eux par un mouvement transversal dudit flanc latéral par rapport audit soubassement. Pour permettre le rapprochement et l'assemblage du flanc latéral avec le soubassement, il peut être nécessaire de laisser un jeu important entre les bords de la paroi de passage de roue et le plancher, au moins dans certaines zones, qui peut être supérieur à 5 millimètres. De plus, la forme bombée du passage de roue rend difficile la réalisation d'un bord tombé sur la paroi de passage de roue ou sur le plancher pour fixer les deux parois entre elles. L'élément de liaison permet ainsi une fixation efficace entre les deux parois malgré ces difficultés. Cet élément de liaison permet en outre de fixer les deux parois entre elles au niveau des parties de la paroi de passage de roue et du plancher non accessible à une pince de soudage par point.

L'invention porte aussi sur un procédé de fixation d'au moins deux parois entre elles, comportant au moins les étapes :
- Positionnement des parois entre elles ;
- Fixation d'un élément de liaison tel que décrit précédemment sur au moins l'une des parois de manière à créer un volume fermé entre lesdites parois et l'équerre de confinement, l'insert structural étant positionné dans le corps creux formé par l'équerre de confinement et les deux parois ;
- Chauffage de l'ensemble formé par les deux parois et l'élément de liaison de manière à provoquer l'expansion de l'insert structural gonflant.

Dans un mode de réalisation préféré de l'invention, le procédé de fixation comporte en plus les étapes :
- de dépôt d'un cordon de colle sur l'équerre de confinement avant la fixation de ladite équerre sur l'une des parois ;
- de positionnement de l'équerre de confinement sur l'une des parois ;
- de mise en place de rivets de manière à fixer l'équerre de confinement contre ladite paroi.

L'invention sera mieux comprise à la lecture de la description qui va suivre, donnée uniquement à titre d'exemple et faite en se référant aux dessins annexés, sur lesquels :
- La fig. 1 est une vue de la liaison entre un passage de roue et un plancher de véhicule comportant un élément de liaison suivant l'invention.
- La fig. 2 est une vue en coupe suivant le plan P de la fig. 1 avant l'expansion de l'insert structural.
- La fig. 3 est une vue similaire à la fig. 2 après l'expansion de l'insert structural.

Les dessins sont des représentations schématiques pour faciliter la compréhension de l'invention. Les composants ne sont pas forcément représentés à l'échelle. Les mêmes références correspondent aux mêmes composants d'une figure à l'autre.

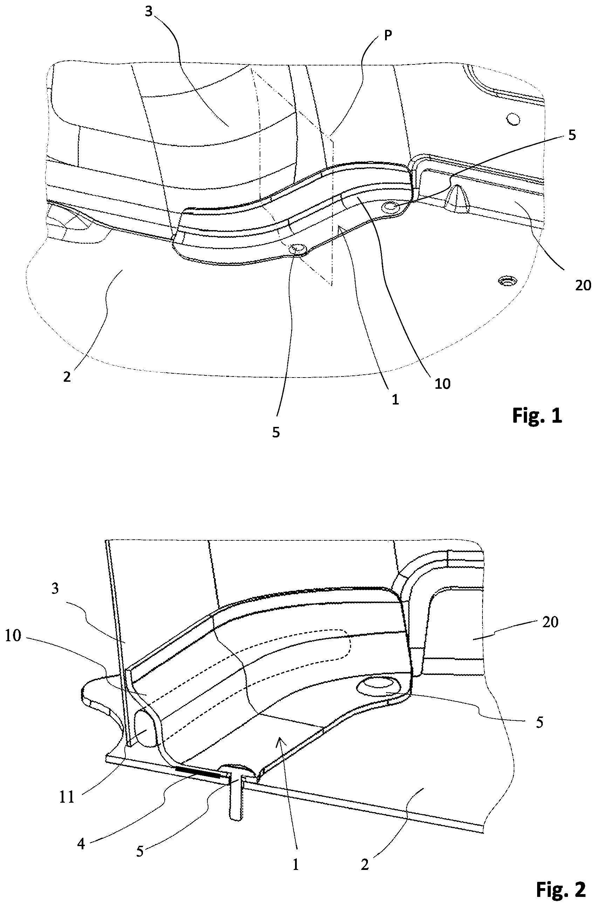

La fig. 1 montre une paroi 3 de passage de roue arrière et un plancher 2 arrière d'un véhicule, vus depuis l'intérieur du véhicule. La paroi 3 de passage de roue est fixée au plancher 2 par un élément de liaison 1. La paroi 3 de passage de roue et le plancher 2 forment entre eux un angle proche de 90 degrés au niveau de la zone où est situé l'élément de liaison 1. L'élément de liaison comporte une équerre de confinement 10 fixée au plancher 3 par des rivets 5. L'équerre de confinement 10 s'étend entre le plancher 2 sur lequel elle est fixée, jusqu'à la paroi 3 de passage de roue, dans l'angle formée par ledit plancher 2 et ladite paroi 3. La forme de l'équerre de confinement 10 comporte une partie bombée entre ces bords de manière à former un corps creux délimité par la paroi 3 de passage de roue, le plancher 2 et ladite équerre de confinement 10. C'est-à-dire que lorsque l'équerre de confinement 10 est fixée au plancher 2, les bords de ladite équerre de confinement 10 ne sont pas juste au niveau des bords de la paroi 3 de passage de roue et du plancher 2, mais situés en retrait de ces bords, de manière à créer le corps creux, comme illustré en fig. 2. De préférence, l'un des bords de ladite équerre de confinement 10 est en contact avec la paroi 3 de passage de roue.

Dans le mode de réalisation illustré en fig. 1, la paroi 3 de passage de roue est formée par une tôle qui se prolonge pour former une paroi latérale intérieure du véhicule. Le plancher 2 comporte un bord tombé 20 qui est fixé directement sur cette paroi latérale intérieure, c'est-à-dire sans pièce intermédiaire. Par contre, le plancher 2 ne comporte pas de bord tombé au niveau de la paroi 3 de passage de roue. Le plancher 2 n'est donc pas fixé directement à la paroi 3 de passage de roue.

Comme illustré dans la fig. 2, un insert structural 11 expansible est placé dans le corps creux. De préférence, cet insert structural 11 est expansible sous l'effet de la chaleur, à partir d'une température donnée. L'expansion de l'insert, c'est-à-dire son augmentation de volume, est irréversible afin de conserver sa forme après son expansion et refroidissement. De tels inserts sont classiquement utilisés dans l'automobile. Ils sont placés généralement lors de la fabrication de la caisse du véhicule avant que ledit véhicule soit chauffé dans une étuve pour cuire une peinture déposée sur sa carrosserie, étape que l'on appelle classiquement l'étuvage. La température d'expansion de l'insert structural 11 est alors choisie inférieure ou égale à la température utilisée au cours de l'étuvage qui peut être par exemple de 160°C. L'insert structural 11 peut être par exemple réalisé par une mousse expansive à base de résine époxy, telle que celle connue sous la dénomination commerciale TEROSON EP 1432 de la société Henkel, avec un taux de gonflement entre 80% et 130%.

Pour placer l'insert structural 11 dans le corps creux, ledit insert structural 11 est fixé à l'équerre de confinement 10 avant que celle-ci ne soit fixée au plancher 2. La fixation de l'insert structural 11 sur ladite équerre de confinement 10 est réalisée par exemple par collage. En variante, la fixation de l'insert structural 11 à l'équerre de confinement 10 peut être obtenue aussi par un clip noyé en partie dans l'insert et coopérant avec un trou réalisé à cet effet dans l'équerre de confinement 10. En variante, l'insert structural 11 peut être placé sur le plancher 2 juste dans la zone de jonction avec la paroi 3 de passage de roue où est installée l'équerre de confinement 10, avant que ladite équerre de confinement 10 soit installée.

L'équerre de confinement 10 comporte une surface d'appui se plaquant contre le plancher 2. Afin d'obtenir une fixation solide, un cordon de colle 4 est de préférence appliqué sur cette surface d'appui. La colle utilisée peut être de type colle structurale classiquement utilisée dans l'automobile, par exemple une colle à base de résine époxy, et qui permet d'obtenir un collage particulièrement résistant entre deux surfaces, en particulier entre deux tôles métalliques. Lors de la mise en place de l'équerre de confinement 10, les rivets 5 permettent de positionner ladite équerre 10 sur le plancher 2. Le serrage des rivets 5 assure une fixation de l'équerre de confinement 10 sur le plancher 2, notamment pendant le séchage de la colle, et permet d'écraser le cordon de colle 4 pour l'étaler entre la surface d'appui de l'équerre de confinement 10 et le plancher 2.

Dans le mode de réalisation illustrée en fig. 2, un jeu existe entre le bord de la paroi 3 de passage de roue et le plancher 2, et ledit plancher 2 est formé par une plaque de tôle qui s'étend de part et d'autre de la paroi 3 de passage de roue au moins dans la zone où est placée l'élément de liaison 1. Le jeu est nécessaire pour permettre le montage des deux pièces entre-elles en usine sans risquer que la partie du plancher 2 s'étendant de part et d'autre de la paroi 3 de passage de roue ne rentre en collision avec ladite paroi 3 de passage de roue.

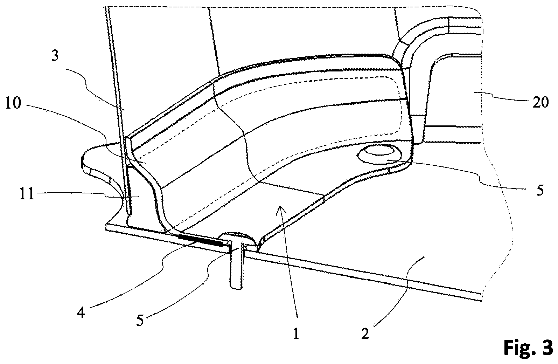

Comme le montre la fig. 3, suite à l'expansion de l'insert structural 11 dans le corps creux après le chauffage dudit insert 11, par exemple après un passage dans une étuve, le volume du corps creux est rempli par l'insert structural 11. En augmentant de volume, l'insert structural 11 vient au contact des surfaces de la paroi 3 de passage de roue et du plancher 2 situées dans le corps creux. De plus, l'insert structural 11 ayant une propriété d'adhérence élevée, il adhère à ces surfaces ainsi qu'à la surface de l'équerre de confinement 10 située du côté du corps creux. Une fois expansé, l'insert structural 11 se durcit tout en conservant ces propriétés d'adhérence à la paroi 3 de passage de roue et au plancher 2. L'homme du métier choisira la dimension et la position de l'insert structural 11 dans le corps creux avant chauffage et expansion de manière appropriée afin que, après son expansion, ledit insert structural 11 soit en contact de préférence sur toute la surface du plancher 2 et de la paroi 3 de passage de roue située dans le corps creux, tout en évitant que de la matière de l'insert structural 11 s'échappe par le jeu entre ladite paroi 3 et le plancher 2. Pour cela, l'homme du métier pourra faire des tests d'expansion de différents inserts structuraux dans différentes configurations pour obtenir la dimension et la position adéquate de l'insert structural 11.

Une fois expansé, l'insert structural 11 permet ainsi de lier rigidement la paroi 3 de passage de roue et le plancher 2. De plus, l'équerre de confinement 10 étant fixée au plancher 2 et l'un de ses bords au contact avec la paroi 3 de passage de roue, l'expansion de l'insert structural 11 crée une pression sur la paroi 3 de passage de roue et le plancher 2. Cette pression met en contrainte ladite paroi de passage 3 de roue et ledit plancher 2, et rigidifie d'avantage la liaison entre ces deux parties, ce qui a pour effet d'augmenter la rigidité globale du véhicule.

L'expansion de l'insert structural 11 permet de plus de remplir le jeu entre le plancher 2 et la paroi 3 de passage de roue, et ainsi de créer une surface de support dans ce jeu sur laquelle un cordon d'étanchéité peut être déposé pour étanchéifier la jonction entre ledit plancher 2 et la paroi 3 de passage de roue, du côté de la paroi 3 de passage de roue situé à l'opposé de l'équerre de confinement 10. En effet, la viscosité trop grande de la matière formant le cordon d'étanchéité au moment de son dépôt ne permet pas de remplir un espace trop important entre deux parois, la matière coulant par absence de support sur lequel adhérer. L'insert structural 11 une fois expansée forme un support dans le jeu entre le plancher 2 et la paroi 3 de passage de roue sur lequel le cordon d'étanchéité peut adhérer pour contrer son écoulement sous l'effet de la gravité. Il n'est pas nécessaire que la matière de l'insert structural 11 après expansion soit juste dans le jeu entre le plancher 2 et la paroi 3 de passage de roue, mais elle peut déborder légèrement du côté de la paroi 3 de passage de roue opposé au corps creux ou être légèrement en retrait du côté du corps creux.

Des cordons d'étanchéité complémentaires peuvent être appliqués autour de l'équerre de confinement 10, pour créer une étanchéité entre les bords de ladite équerre 10 et la paroi 3 de passage de roue, ainsi qu'avec le plancher 2.

Pour obtenir cet assemblage, les étapes suivantes sont mises en oeuvre, en suivant par exemple cet ordre :
- La paroi 3 de passage de roue et le plancher 2 sont positionnés l'un par rapport à l'autre.
- L'insert structural 11 est fixé à l'équerre de confinement 10 pour former l'élément de liaison 1.
- L'élément de liaison 1 est positionné sur le plancher 2 de manière à permettre la mise en place des rivets 5 de fixation. De manière optionnelle, un cordon de colle 4 peut être déposé sur la face d'appui de l'équerre de confinement 10 pour renforcer sa fixation avec le plancher 2, avant que ladite équerre 10 ne soit fixée au plancher 2.
- Les rivets 5 sont positionnés et serrés de sorte à plaquer l'équerre de confinement 10 contre le plancher 2 au niveau de la surface d'appui.
- L'insert structural 11 est chauffé de manière à obtenir son expansion.

En variante, l'équerre de confinement 10 peut être fixée au plancher 2 uniquement par un cordon colle.

En autre variante, l'insert structural 11 peut être placé ou fixé sur le plancher 2, ou sur la paroi 3 de passage de roue, sans être fixé à l'équerre de confinement 10.

L'homme du métier adaptera l'ordre de réalisation de ces étapes de manière évidente en fonction des contraintes de montage qu'il pourra rencontrer. Par exemple, l'élément de liaison 1 peut être fixé au plancher 2 avant que ledit plancher 2 soit positionné par rapport à la paroi 3 de passage de roue. Ainsi, le plancher 2 et la paroi 3 de passage de roue peuvent être fixés entre eux, même si l'accès à l'élément de liaison 1 n'est plus possible une fois le plancher 2 et la paroi 3 de passage de roue positionnés l'un par rapport à l'autre.

Le chauffage de l'insert structural 11 est obtenu par exemple en plaçant l'assemblage dans une étuve. L'étuve peut être par exemple une étuve dans laquelle est chauffée une caisse d'un véhicule pour cuire une peinture qui a été déposée sur les tôles dudit véhicule. En variante, le chauffage de l'insert peut être obtenu lors du passage dans un bain de cataphorèse.

D'autres moyens de fixation de l'équerre de confinement 10 avec le plancher 2 peuvent être envisagés, comme par exemple de manière non limitative par vissage, collage sans utiliser de rivet, une fixation par clip, ou encore par soudage.

L'équerre de confinement 10 peut être réalisée en métal, comme par exemple en acier ou en alliage d'aluminium, ou encore en matériau composite ou en matériau plastique.

En variante, l'équerre de confinement 10 peut être fixée uniquement sur la paroi 3 de passage de roue, ou dans une autre variante fixée à la fois sur la paroi 3 de passage de roue et sur le plancher 2, par des moyens similaires à ceux déjà indiqués.

L'élément de liaison 1 peut être utilisé pour fixer entre elles des parois dans d'autres domaines que celui de l'automobile.

## Revendications

1. Elément de liaison (1) destiné à fixer au moins deux parois (2, 3) entre elles, lesdites parois (2, 3) formant un angle entre-elles différent de 180 degrés, **caractérisé en ce qu'**il comporte une équerre de confinement (10) destiné à être fixée au moins sur l'une des deux parois (2), et agencée de manière à former un corps creux avec les deux parois (2, 3) lorsque ladite équerre de confinement (10) est fixée à au moins une desdites parois (2, 3), et un insert structural (11) adhérent et expansible, destiné à être positionné dans le corps creux.

2. Elément de liaison (1) suivant la revendication 1 caractérisé en que l'insert structural (11) est expansible thermiquement.

3. Elément de liaison (1) suivant l'une des revendications 1 ou 2 **caractérisé en ce que** l'insert structural (11) est rigide après son expansion.

4. Elément de liaison suivant l'une des revendications 1 à 3 **caractérisé en ce que** l'insert structural (11) est fixé à l'équerre de confinement (10).

5. Ensemble comportant aux moins deux parois (2, 3) fixées entre elles par un élément de liaison (1) suivant l'une des revendications de 1 à 4, l'équerre de confinement (10) étant fixée à au moins l'une des deux parois (2, 3).

6. Ensemble suivant la revendication 5 **caractérisé en ce que** la fixation de l'équerre de confinement (10) à l'une des deux tôles (2, 3) est réalisée par collage et/ou rivetage.

7. Véhicule comportant un élément de liaison (1) suivant l'une des revendications de 1 à 4.

8. Véhicule suivant la revendication 7 **caractérisé en ce que** l'élément de liaison (1) fixe un plancher arrière (2) à une paroi (3) de passage de roue arrière.

9. Procédé de fixation d'au moins deux parois (2, 3) entre elles, comportant au moins les étapes :
- Positionnement des parois (2, 3) entre elles ;
- Fixation d'un élément de liaison (1) suivant l'une des revendications de 1 à 4 sur au moins l'une des parois (2) de manière à créer un volume fermé entre lesdites parois (2, 3) et l'équerre de confinement (10), l'insert structural (11) étant positionné dans le corps creux formé par l'équerre de confinement (10) et les deux parois (2, 3) ;
- Chauffage de l'ensemble formé par les deux parois (2, 3) et l'élément de liaison (1) de manière à provoquer l'expansion de l'insert structural gonflant.

10. Procédé de fixation suivant la revendication 9 **caractérisé en ce que** l'étape de fixation de l'élément de liaison (1) sur l'une des parois (2) comporte les étapes :
- de dépôt d'un cordon de colle (4) sur l'équerre de confinement avant la fixation de ladite équerre sur l'une des parois (2, 3),
- de positionnement de l'équerre de confinement (10) sur l'une des parois (2, 3)
- de mise en place de rivets de manière à fixer l'équerre de confinement contre ladite paroi (2, 3).

## Patentansprüche

1. Verbindungselement (1), das dazu bestimmt ist, mindestens zwei Wände (2, 3) miteinander zu verbinden, wobei die Wände (2, 3) zueinander einen Winkel, der von 180 Grad unterschiedlich ist, bilden, **dadurch gekennzeichnet, dass** es einen Umschließungsbeschlag (10) umfasst, der dazu bestimmt ist, auf mindestens einer der zwei Wände (2) befestigt zu sein, und eingerichtet ist, um einen Hohlkörper mit den zwei Wänden (2, 3) zu bilden, wenn der Umschließungsbeschlag (10) an mindestens einer der Wände (2, 3) befestigt ist, und einen haftenden und dehnungsfähigen Struktureinsatz (11), der dazu bestimmt ist, in dem Hohlkörper positioniert zu sein.

2. Verbindungselement (1) nach Anspruch 1, **dadurch gekennzeichnet, dass** der Struktureinsatz (11) wärmedehnungsfähig ist.

3. Verbindungselement (1) nach einem der Ansprüche 1 oder 2, **dadurch gekennzeichnet, dass** der Struktureinsatz (11) nach seinem Dehnen starr ist.

4. Verbindungselement nach einem der Ansprüche 1 bis 3, **dadurch gekennzeichnet, dass** der Struktureinsatz (11) an dem Umschließungsbeschlag (10) befestigt ist.

5. Einheit, die mindestens zwei Wände (2, 3) umfasst, die aneinander durch ein Verbindungselement (1) nach einem der Ansprüche 1 bis 4 befestigt sind, wobei der Umschließungsbeschlag (10) an mindestens einer der zwei Wände (2, 3) befestigt ist.

6. Einheit nach Anspruch 5, **dadurch gekennzeichnet, dass** die Befestigung des Umschließungsbeschlags (10) an einem der zwei Bleche (2, 3) durch Kleben und/oder Nieten ausgeführt wird.

7. Fahrzeug, das ein Verbindungselement (1) nach einem der Ansprüche 1 bis 4 umfasst.

8. Fahrzeug nach Anspruch 7, **dadurch gekennzeichnet, dass** das Verbindungselement (1) einen hinteren Fußboden (2) an einer Durchgangswand (3) des Hinterrads befestigt.

9. Verfahren zum Befestigen von mindestens zwei Wänden (2, 3) aneinander, das mindestens die folgenden Schritte umfasst:
- Positionieren der Wände (2, 3) zueinander;
- Befestigen eines Verbindungselements (1) nach einem der Ansprüche 1 bis 4 auf mindestens einer der Wände (2) derart, dass ein geschlossener Raum zwischen den Wänden (2, 3) und dem Umschließungsbeschlag (10) gebildet wird, wobei der Struktureinsatz (11) in dem Hohlkörper, der von dem Umschließungsbeschlag (10) und den zwei Wänden (2, 3) gebildet ist, positioniert ist;
- Erhitzen der Einheit, die von den zwei Wänden (2, 3) und dem Verbindungselement (1) gebildet wird derart, dass das Dehnen des schwellenden Struktureinsatzes bewirkt wird.

10. Befestigungsverfahren nach Anspruch 9, **dadurch gekennzeichnet, dass** der Befestigungsschritt des Verbindungselements (1) auf einer der Wände (2) die folgenden Schritte umfasst:
- Aufbringen eines Klebstoffstrangs (4) auf dem Einschusswinkel vor dem Befestigen des Winkels auf einer der Wände (2, 3),
- Positionieren des Umschließungsbeschlags (10) auf einer der Wände (2, 3),
- Anbringen von Nieten derart, dass der Umschließungsbeschlag gegen die Wand (2, 3) befestigt ist.

## Claims

1. A linking element (1) intended for securing at least two walls (2, 3) to one another, said walls (2, 3) forming an angle other than 180 degrees therebetween, **characterized in that** it comprises a containment bracket (10) intended to be secured at least to one of the two walls (2), and arranged so as to form a hollow body with the two walls (2, 3) when said containment bracket (10) is secured to at least one of said walls (2, 3), and an adherent and expandable structural insert (11) which is intended to be positioned in the hollow body.

2. The linking element (1) according to Claim 1, **characterized in that** the structural insert (11) is thermally expandable.

3. The linking element (1) according to one of Claims 1 or 2, **characterized in that** the structural insert (11) is rigid after its expansion.

4. The linking element according to one of Claims 1 to 3, **characterized in that** the structural insert (11) is secured to the containment bracket (10).

5. An assembly comprising at least two walls (2, 3) secured to one another by a linking element (1) according to one of Claims 1 to 4, the containment bracket (10) being secured to at least one of the two walls (2, 3).

6. The assembly according to Claim 5, **characterized in that** the securing of the containment bracket (10) to one of the two sheets (2, 3) is realized by bonding and/or riveting.

7. A vehicle comprising a linking element (1) according to one of Claims 1 to 4.

8. The vehicle according to Claim 7, **characterized in that** the linking element (1) secures a rear floor (2) to a rear wheel arch wall (3).

9. A method for securing at least two walls (2, 3) to one another, comprising at least the steps:
- Positioning of the walls (2, 3) with respect to one another;
- Securing a linking element (1) according to one of Claims 1 to 4 on at least one of the walls (2) so as to create a closed volume between said walls (2, 3) and the containment bracket (10), the structural insert (11) being positioned in the hollow body formed by the containment bracket (10) and the two walls (2, 3);
- Heating of the assembly formed by the two walls (2, 3) and the linking element (1) so as to cause the expansion of the swelling structural insert.

10. The securing method according to Claim 9, **characterized in that** the step of securing the linking element (1) on one of the walls (2) comprises the steps:
- of depositing a bead of glue (4) on the containment bracket before the securing of said bracket on one of the walls (2, 3),
- of positioning the containment bracket (10) on one of the walls (2, 3),
- of putting rivets in place so as to secure the containment bracket against said wall (2, 3).
